# EUROPEAN PATENT SPECIFICATION

(11) **EP 4 268 051 B1**
(45) Date of publication and mention of the grant of the patent: **27.11.2024**
(21) Application number: 22717477.8
(22) Date of filing: 18.03.2022
(51) Int. Cl.: G06F 1/3287, G06F 1/30, G06F 21/62, G06F 11/14, G06F 12/02, G06F 12/14

(54) **SAVE-RESTORE ENGINE FOR ACCESS CONTROL**
SPEICHERSICHERUNGS-ENGINE ZUR ZUGANGSSTEUERUNG
MOTEUR DE SAUVEGARDE-RESTAURATION POUR CONTRÔLE D'ACCÈS

(43) Date of publication of application: 01.11.2023
(73) Proprietor: Google LLC, Mountain View, CA 94043 (US)
(72) Inventor: SAVE, Prathamesh Ramesh, Mountain View, California 94043 (US); DEIVASIGAMANI, Vinoth Kumar, Mountain View, California 94043 (US)
(74) Representative: Marks & Clerk GST
(86) International application number: PCT/US2022/020999
(87) International publication number: WO 2023/177408

(56) References cited:
- WO-A1-2022/055490
- US-A1- 2008 307 240
- US-A1- 2012 198 112

## Description

### BACKGROUND

This specification relates to systems having integrated circuit devices.

A system on a chip (SoC) is an integrated circuit that integrates different components of a computing device, which can include, for example, a central processing unit (CPU), memory, input/output ports, cellular radios, and secondary storage, and so on. In contrast to the traditional motherboard-based PC architecture, where a motherboard houses and connects detachable or replaceable components, SoCs integrate all these components into a single integrated circuit. SoCs are commonly used in mobile computing, edge computing, and embedded systems, such as smartphones, tablet computers, WiFi routers, Internet of Things (IoT) devices, and so on.

An SoC can include one or more subsystems and each subsystem can include a plurality of modules, e.g., client devices. For example, the modules can include a memory mapped resource or an I/O mapped resource. The modules can be isolated from each other and can belong to different security realms, which means that the system assumes that the devices do not trust one another. Each module can thus be implemented with devices and configuration information that control which other modules on the device can communicate with the module.

When an SoC or a module loses its power and then regains power, e.g., due to a device going to sleep, the configuration information regarding which modules can communicate to which other modules needs to be restored from a saved state in a secure way. WO2022/055490A1 describes a hardware-based save-and-restore controller in a system-on-a-chip that can automatically save and restore access control configurations of IP subsystems during a power-down and power-up sequence. US2008/307240A1 describes an electronic circuit including a power management circuit and a power managed circuit. US2012/198112A1 describes an apparatus for adapting a predesigned circuit module not supporting a power management protocol to a power management protocol.

### SUMMARY

This specification describes technologies for implementing a secure save-restore engine (SRE) for saving and restoring configuration data of components in a computing device during a power collapse event during which the system powers down or turns off components to save power. The SRE can make use of an isolated local memory that is powered on during the power collapse event, which can prevent compromised or untrusted code from modifying the saved configuration data. One application for the SRE is to save and restore configuration data of access control (AC) components or registers that govern which components of the system are allowed to communicate with which other components.

The subject matter described in this specification can be implemented in particular embodiments so as to realize one or more of the following advantages. The save-restore engine (SRE) described in this specification can implement a more secure, hardware-based state machine to perform the save and the restore of the configuration data of components in a computing device, e.g., AC components or other registers. The SRE is configured to use an isolated local memory that has an always-on or standby power rail during power collapse events. The isolation of the local memory protects the configuration data from access by untrusted components on the SoC. In addition, the isolation of the local memory makes it safe from compromised application software.

The techniques described in this specification provide several advantages over other mechanisms for saving and restoring configuration data. Compared to software-based and dynamic random access memory (DRAM)-based solutions, the techniques described in this specification execute significantly faster and consume significantly less power. For example, using a DRAM controller and a DRAM Physical Layer for a save-restore operation is relatively costly in terms of time and power consumption in waking up after a power collapse event.

The SRE can implement decentralized data packing and unpacking during the saving and restoring of the configuration data of the AC components or other registers. Each to-be saved component can inform the SRE, on the first transaction of the save operation, the size of the data that needs to be saved. Thus, each to-be saved component can perform its local packing of data during the saving process and can perform its local unpacking during the restoring process, which helps efficient utilization of the local memory as well as reduces the time for restoration. Compared with the software based solution or the DRAM based hardware solution, the SRE based approach provides better power usage and better protection of the data of the AC components or other registers and avoids the need for integrity protecting of the data. The SRE can send a special signal to the AC component or other registers that causes the AC component or other registers to block off any client transactions with the AC component or other registers until the save or restore operations are completed by the SRE.

The techniques described in this specification can block off access to local resources until the restoration of the AC components or other registers is completed. Thus, the techniques described in this specification can prevent certain types of attacks that are possible with software-based solutions. For example, the techniques described in this specification can prevent other entities from maliciously obtaining information from the protected resources in the period of time between the release of a reset instruction and a completion of the restoration of the configuration of the AC components or other registers.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of an example computing device.
FIG. 2 is a diagram of an example save-restore engine (SRE).
FIG. 3 is a flowchart of an example process for saving configuration data.
FIG. 4 is a flowchart of an example process for restoring configuration data.
FIG. 5 is a diagram of an example generic save-restore widget.
FIG. 6 is a diagram of an example save-restore widget for a third party access control component.

Like reference numbers and designations in the various drawings indicate like components.

### DETAILED DESCRIPTION

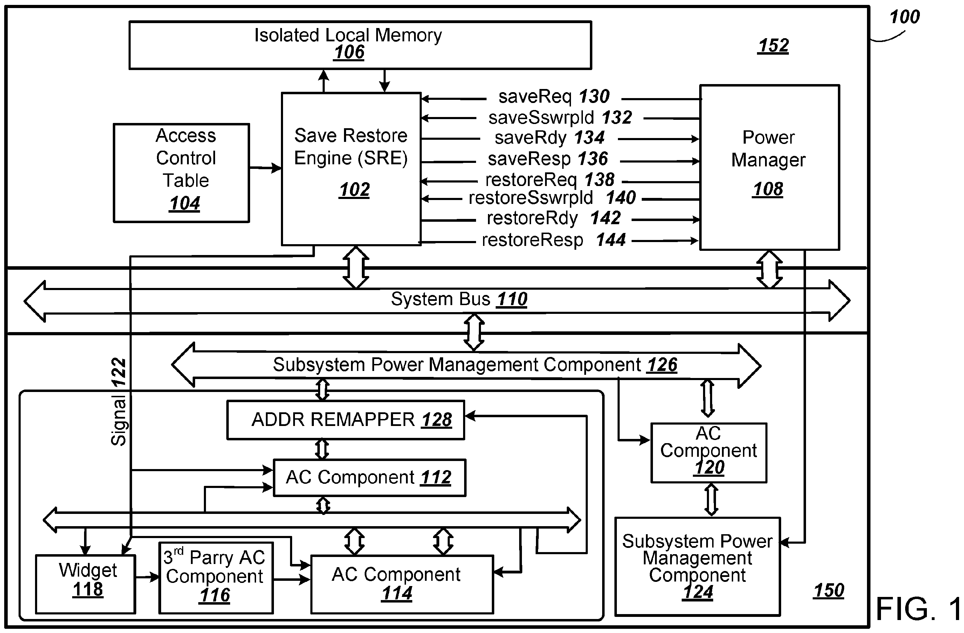

FIG. 1 is a diagram of an example computing device 100. The computing device 100 can be a system on a chip (SoC) device installed on a mobile device, e.g., a smart phone or a tablet device. An SoC is an integrated circuit that includes each component of the system on a single silicon substrate or on multiple interconnected dies, e.g., using silicon interposers, stacked dies, or interconnect bridges.

The computing device 100 includes one or more subsystems and each subsystem can include one or more client devices. In order to improve operational integrity and data security, the client devices can be isolated from each other and the system can be designed to operate such that the devices do not trust each other. To that end, each client device can have a respective access control (AC) component that is configured to control which other components on the computing device 100 can communicate with the client device or other client devices. Each client device can have other registers requiring save and restore across power collapse.

The AC components can be implemented as hardware security components that can manage the security of a transaction in the subsystem and can provide isolation amongst resources in the subsystem, e.g., memory mapped components and IO mapped components. Memory mapped components are resources that can be accessed by an initiator, such as a CPU, by addressing the resource using a specific address in the system memory map. Examples of the memory mapped components include static random access memory (SRAM), dynamic random access memory (DRAM), configuration registers. IO mapped components are resources that are not explicitly memory mapped. The IO mapped components can be accessed by initiators using special programming sequences that are custom for each IO mapped component. Examples of the IO mapped components include first-in, first-out (FIFO) buffers, peripheral devices, such as peripheral component interconnect express (PCIE), serial peripheral interface (SPI), etc. Examples of the AC components in a computing device include firewalls, realm allocators (RA), and system-level memory management unit (SMMU). For example, FIG. 1 shows an AC component 112, an AC component 114, an AC component 120, and a third party AC component 116.

When a subsystem is power gated, the computing device 100 can include a plurality of retention registers to retain the data of the AC components. For example, an SoC can include retention registers for the control registers in the AC components and the retention registers can be located in a non-power gated power rail. However, during a power collapse event, the retention registers lose their content too. Therefore, when the computing device 100 loses its power, e.g., when power rails are collapsed, it is desirable to save the data of the AC components or other registers, e.g., status and configuration of the AC components, in some region on the computing device 100 that has active power such that the AC components or other registers can be restored back when the computing device 100 restores its power, e.g., when the power rails are powered back up.

The computing device 100 includes a save-restore engine (SRE) 102. The SRE 102 is configured to save, in an isolated local memory 106, configuration data, e.g., status data and configuration data, for an AC component or other registers, e.g., the AC component 112, located in a power domain 150 affected by a power collapse event. The SRE 102 is configured to restore, from the isolated local memory 106, the configuration data of the AC component or other registers when the power for the power domain 150 is restored.

A power domain is a collection of gates and devices powered by the same power and ground supply. For example, the AC component 112, the AC component 114, and the third party AC component 116 are in the same power domain 150. As another example, the isolated local memory 106, the SRE 102, the AC table 104, and the power manager 108 are in the same power domain 152, and the power of the power domain 152 is always-on.

In some implementations, an AC component, e.g., a firewall, can include an additional function to support the save and restore operations of the SRE. For example, the AC component can include an identification of the SRE save request or restore request. And upon receiving a save request or a restore request, the AC component can lock system accesses to the configuration data of the AC component during the save/restore operations.

In some implementations, the AC component can be configured to have a mechanism to compress the configuration data to be saved in the isolated local memory. The configuration information that needs to be saved and restored can include highly compressible information. For example, to save storage space in the isolated local memory 106, a widget 118, e.g., a compression widget, can be deployed to compress the configuration information. As another example, the widget 118 can use an address map table to select critical control registers in the AC component 116 that need to be saved. Therefore, the amount of configuration data to be saved can be reduced.

In some implementations, a component can have multiple unused address locations between address locations that need to be saved or restored. These unused address locations can be avoided by skipping these locations when compacting the payload for the save/restore operation. In some implementations, a component can have multiple addresses that implement a small amount of data, e.g., less than four bytes of data, that needs to be saved or restored. Thus, data from multiple addresses can be combined into a single payload for a given transaction for the save/restore operation. In some implementations, the AC component can implement custom compacting or decompacting methods that are suitable to the AC component. Therefore, the SRE 102 can be agnostic to the data structure of the configuration registers of the AC components participating in the save/restore operation. For example, the SRE mechanism can act like a plug operation, e.g., a plug connected to system bus 110 and the signal 122, a register operation, e.g., a register that makes an entry to an AC component table, and a play operation.

The computing device 100 includes a power manager 108 configured to control power provided to a plurality of power domains on the device. For example, the power manager is configured to control power provided to the AC component 112 and the AC component's corresponding client device in the power domain 150. The power manager 108 can issue a power collapse operation in the power domain 150. The power manager 108 can restore power to the power domain 150. In some implementations, during a power collapse event, the power manager 108 can disable the address remapper 128 in a subsystem of the computing device 100. The address remapper 128 can deliver different addresses to different components in the computing device 100, e.g., delivering different addresses to different DRAMs. By disabling the address remapper 128, the AC components can have a static address through a static mapping in the physical address space.

The power manager 108 can communicate with the SRE 102 such that the SRE 102 can perform the save operation and the restore operation. For example, the power manager 108 can send a save request, e.g., "saveReq" 130, to the SRE 102 to initiate a save operation. The power manager 108 can send an identification of an AC component, e.g., "saveSswpid" 132, to the SRE 102 to identify the AC component whose configuration data needs to be saved. The power manager 108 can receive, from the SRE 102, a save response, e.g., "saveRdy" 134, when the save operation is completed. The power manager 108 can send a restore request, e.g., "restoreReq" 138, to the SRE 102 to initiate a restore operation. The power manager 108 can send an identification of an AC component, e.g., "restoreSswpid" 140, to the SRE 102 to identify the AC component whose configuration data needs to be restored. The power manager 108 can receive, from the SRE 102, a restore response, e.g., "restoreRdy" 142, when the restore operation is completed.

The computing device 100 includes an access control (AC) table 104. The AC table 104 defines the one or more AC components in the computing device 100 that need to be saved and/or restored during a power collapse event. The AC table 104 can be a hardcoded table and each computing device 100 can have a corresponding AC table. The AC table 104 includes one or more entries corresponding to one or more AC components in the computing device 100 and each entry can be indexed using an identification of the respective AC component. The identification identifies the AC component in the computing device 100.

In some implementations, the fields of each entry can include a field that indicates if the associated AC component entry is valid and a field that indicates a start address for the associated AC component. During a save operation, the SRE can read the configuration data of the AC component from a memory location starting at the start address for the AC component. During a restore operation, the SRE can write the configuration data to a memory location starting at the start address for the AC component. In some implementations, the computing device can include multiple subsystems and each subsystem can include one or more AC components. Each entry in the AC table 104 can be indexed by an identification of the subsystem and an identification of the AC component in the subsystem.

The computing device 100 includes an isolated local memory 106. The isolated local memory 106 is only accessible to the SRE 102, is not memory mapped, and is software inaccessible. For example, the isolated local memory 106 can include a non-memory mapped pseudo dual port SRAM for storage and for retention. As another example, the isolated local memory 106 can include a DRAM that can be used to save and restore the configuration data of the AC component, and the system can protect the configuration data stored in the DRAM against potential tampering using cryptographic methods, such as authentication through encryption/decryption, anti-replay protection, and so on. Thus, the isolated local memory 106 is protected against distrusting security components and/or transactions. The isolated local memory 106 is in an always on power domain 152. During a power collapse event, the isolated local memory 106 can have power such that the configuration data of the AC components stored in the isolated local memory 106 will not be lost. During a power collapse event, the SRE 102 can save configuration data of each of the one or more AC components in the isolated local memory 106. When the power is recovered, the SRE 102 can restore the configuration data from the isolated local memory 106 to each of the one or more AC components.

After successfully saving the configuration data for the AC component in the isolated local memory 106, the SRE 102 can be configured to send a signal 122 to the AC component, e.g., the AC component 112 and/or the AC component 114. For example, the signal 122 can indicate that a restore operation for the AC component is pending. The signal can cause the AC component to enter a state in which other components or transactions cannot access the configuration data of the AC component until a restore operation is completed. In some implementations, the signaling can be achieved without a sideband hardware signal, by having the SRE 102 write to a special register in the AC component 112 or the AC component 114.

In some implementations, the SRE 102 can be configured to send the signal 122 to a widget 118 that is connected with a third party AC component 116. For example, the signal 122 can indicate that a restore operation for the third party AC component 116 is pending. The signal can cause the widget 118 to enter a state in which other components or transactions cannot access the configuration data of the third party AC component 116 until a restore operation is completed.

The computing device 100 can include a system bus 110 that connects the components of the computing device 100 in the power domain 152 and the components of the computing device 100 in the power domain 150. The SRE 102 can communicate with an AC component through the system bus 110. The power manager 108 can communicate with an AC component through the system bus 110. In some implementations, the system bus 110 can communicate with a subsystem power management component 126 or 124 that communicates with the AC component. The subsystem power management component can ensure that the subsystem is not usable before the access control configuration of the AC component of the subsystem is restored.

In some implementations, the computing device 100 can include a third party AC component 116. The computing device can include a widget 118 configured to implement a save restore tracker that tracks when the save operation or the restore operation starts and ends. Because the third party component may not be configured to interpret the save or restore operations from the SRE 102, the widget 118 can help support the save and restore operations by identifying the SRE save or restore requests, e.g., receiving the signal 122 from the SRE, and locking system access to the configuration data of the third party AC components during save or restore operations.

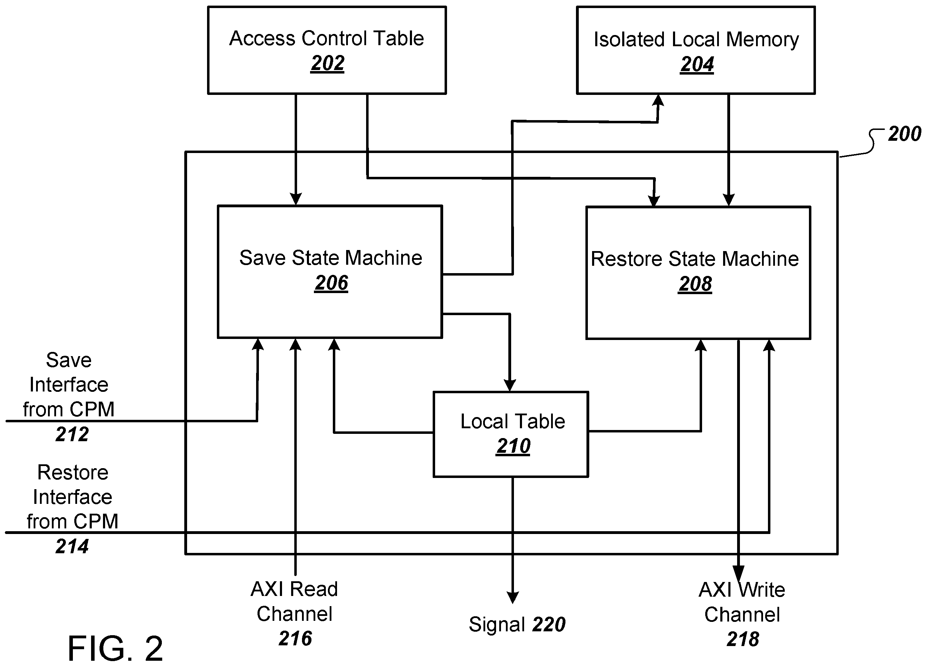

FIG. 2 is a diagram of an example save-restore engine (SRE) 200, which can be an example implementation of the SRE 102 of the computing device 100 of FIG. 1. The SRE 200 can accept the save and/or restore request from a power manager. The SRE 200 can perform a saving operation, including: identifying the AC components listed in the AC table 202, and saving the configuration data from the AC components to an isolated local memory 204. The SRE 200 can perform a restore operation, including identifying the AC components listed in the AC table 202 that have been saved in the isolated local memory 204, and restoring the configuration data of the AC components from the isolated local memory 204 to the AC components.

The SRE 200 can implement a hardware based state machine, e.g., the save state machine 206 and the restore state machine 208, to perform the save and the restore of the configuration data of the AC components. That is, the SRE does not have a software interface. Therefore, the SRE can isolate the isolated local memory 204 from system accesses generated from the transactions and/or components of the computing device.

The SRE 200 can include a local table 210. The local table 210 includes a plurality of entries and each entry can correspond to an AC component in a computing device or a subsystem of the computing device. Each entry can be indexed by an identification of an AC component or an identification of a subsystem.

For each AC component, an entry of the local table 210 can include a first field, e.g., a VLD bit, that indicates if the AC component is successfully saved in the isolated local memory 204. For example, each entry of the local table 210 can include a field, e.g., one bit indicating if the configuration data of the AC components for a subsystem is successfully saved in the isolated local memory. If the save operation is successfully completed, this bit can be set to 1. If the save operation is not successfully completed, e.g., an error occurs, this bit can be set to 0. If a restore operation is successfully completed, this bit can be reset to 0. In some implementations, the bit can be set to 0 during a cold reset of the computing device.

For each AC component, an entry of the local table 210 can include a second field that indicates a start address of the AC component in the isolated local memory 204 to perform the save operation and the restore operation. For example, the field can be 32 bits or 64 bits, and can be set when the first save operation is performed for the corresponding AC component. The field can be reset to 0 during a cold reset of the computing device.

In some implementations, an entry of the local table 210 can include a third field, e.g., a set bit, that indicates if the AC component has been mapped into the isolated local memory 204 for the save operation and the restore operation. For example, the field can be one bit, and can be set when the first save operation is performed for the corresponding AC component. The field can be reset to 0 during a cold reset of the computing device.

In some implementations, SRE 200 can send a signal 220 to an AC component during a save operation or during a restore operation. For example, the local table 210 can send the signal 220. The signal 220 can indicate to the AC component, e.g., a firewall in a subsystem, that the save or restore operation is pending. In response to receiving the signal 220, the AC component can enter a state in which the AC component is accessible only by the SRE 200. That is, the AC component can block access through its ports by other components or transactions in the computing device.

The SRE 200 includes a hardware based state machine to perform the save and the restore of the configuration data of the AC components. The SRE 200 can include a save state machine 206 and a restore state machine 208. The save state machine 206 stores and updates status information, e.g., an address of a pointer and a counter, during a save operation. The save state machine 206 can interact with the power manager through a save interface 212. The save state machine 206 can access information from the local table 210, e.g., from a respective entry associated with the AC component. For example, the save state machine 206 can obtain a start address of the AC component in the isolated local memory 204. The save state machine 206 can write information to the local table 210, e.g., to a respective entry associated with the AC component. For example, after allocating memory space for an AC component in the isolated local memory 204, the save state machine 206 can save, in the local table 210, the start address of the AC component in the isolated local memory 204. As another example, after a successful save operation, the save state machine 206 can set a save success bit to 1.

The save state machine 206 can save configuration data of an AC component to the isolated local memory 204. The save state machine 206 can obtain information from the AC table 202. For example, the save state machine can verify whether an AC component is listed in the AC table 202, and can obtain a start address of the AC component from the AC table 202. The save state machine 206 can interact with the system bus through an interface. For example, the save state machine 206 can interact with the system bus through an Advanced eXtensible Interface (AXI) read channel 216 to read the configuration data of an AC component. The AXI read interface can support for single reads with data width of a predetermined number of bits, e.g., 32 bits or 64 bits.

The restore state machine 208 stores and updates status information, e.g., an address of a pointer and a counter, during a restore operation. The restore state machine 208 can interact with the power manager through a restore interface 214. The restore state machine 208 can access information from the local table 210, e.g., from a respective entry associated with the AC component. For example, the restore state machine 208 can obtain a start address of the AC component in the isolated local memory 204. The restore state machine 208 can write information to the local table 210, e.g., to a respective entry associated with the AC component. For example, after a successful restore operation, the save state machine 206 can set a save success bit to 0.

The restore state machine 208 can restore configuration data of an AC component from the isolated local memory 204. The restore state machine 208 can obtain information from the AC table 202. For example, the restore state machine can verify whether an AC component is listed in the AC table 202, and can obtain a start address of the AC component from the AC table 202. The restore state machine 208 can interact with the system bus through an interface. For example, the restore state machine 208 can interact with the system bus through an Advanced eXtensible Interface (AXI) write channel 218 to write the configuration data of an AC component. The AXI write interface can support for single writes with data width of a predetermined number of bits, e.g., 32 bits or 64 bits.

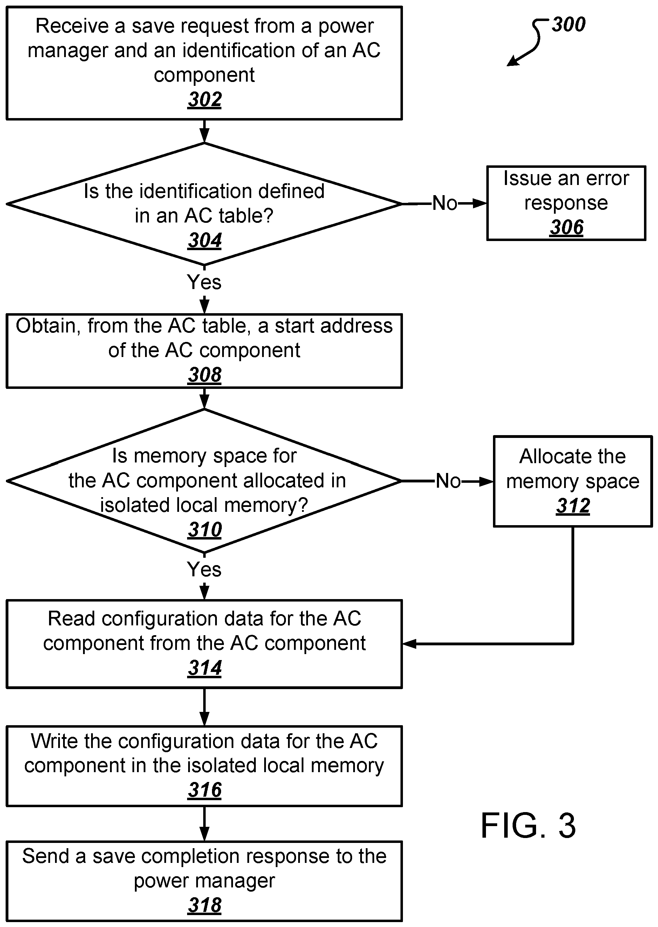

FIG. 3 is a flowchart of an example process 300 for saving configuration data of an AC component. For convenience, the process 300 will be described as being performed by a system that includes an SRE in the computing device, e.g., the SRE 102 in the computing device 100 of FIG. 1. The system can include the components described in reference to FIG. 1, including one or more AC components, a power manager, an isolated local memory, an AC table, or some combination of these.

The system can receive a save request from a power manager and an identification of an AC component (302). For example, a power manager can issue a save request, e.g., the saveReq130 signal, to the SRE and can provide an identification (ID) of the AC component or together with an identification of the subsystem to be saved, e.g., the saveSswrpid 132 signal.

The system can determine whether the identification of the AC component is defined in an AC table (304). Upon receiving the save request, the SRE can check whether the requested AC component, e.g., through the ID, is defined in the AC table that defines the AC components. If the system determines that the identification of the AC component is not defined in the AC table, the system can issue an error response (306). For example, if the SRE cannot find the requested AC component in the AC table, the SRE can respond to the power manager with an error response, e.g., the saveResp 136 signal.

In some implementations, when receiving multiple save requests within a period of time or simultaneously, the SRE can queue up the multiple save requests received from the power manager. The SRE can send a response message, e.g., the saveResp 136 signal, to the power manager. The response message can include the ID of the AC component that is being queued up or together with an identification of the subsystem to be saved.

If the system determines that the identification of the AC component is defined in the AC table, the system can obtain, from the AC table, a start address of the AC component (308). That is, if the requested AC component is in the AC table, the SRE can load the start address indicated in the AC table. For example, the SRE can include a pointer to access the AC component, and the SRE can set the pointer to the start address of the AC component.

In some implementations, the SRE can receive a save request from the power manager to save a plurality of AC components of a subsystem in the computing device. The SRE can receive an ID of a subsystem wrapper from the power manager. The SRE can obtain a start address to each of the AC components indicated in the AC table using the ID of the subsystem wrapper. For example, the SRE can set its read pointer to access the AC components to the start address of the first AC component, e.g., Component 0, of the plurality of AC components. After finishing saving the configuration data of the first AC component, the SRE can move the read pointer to the start address of the next AC component.

The system can determine whether memory space of the AC component is allocated in an isolated local memory (310). The SRE can check whether an initial allocation of memory space was done for the requested AC component in the isolated local memory that is connected to the SRE. The SRE can check the local table 210 of the SRE. For example, the SRE can check the one bit SET field of the entry in the local table 210 to determine whether the initial allocation was done. This bit can be set when the first save operation is performed for the corresponding AC component.

If the system determines that the memory space is not allocated, the system can allocate the memory space of the AC component (312). For example, if an allocation is not done, e.g., when this is the first time the AC component is saved, the SRE can create an allocation for the AC component using an unmapped address location in the local memory. Afterwards, the SRE can update its local table to save the start address of the AC component in the isolated local memory.

After allocating the memory space or if the system determines that the memory space is allocated, the system can read configuration data for the AC component from the AC component (314). If the allocation was done, the SRE can read an address associated with the AC component, e.g., a start address, from a local table 210 of the SRE. The start address field of an entry in the local table can be set when the first save operation is performed for the corresponding AC component. For example, the SRE can include a save state machine 206 that includes a read pointer to the AC component and a write pointer to the isolated local memory. The SRE can set the read pointer to the start address of the AC component and can set the write pointer to the start address for the AC component in the isolated local memory.

In some implementations, the SRE can send an initial read operation to the AC component together with a signal indicating the save operation to the AC component. After receiving the initial read operation, the AC component can determine that the save operation has been initialized and can block off any further access to its configuration data from transaction that is not from the SRE. For example, the AC component can block off any further access to its configuration data unless the access comes from SRE.

In some implementations, after receiving the initial read operation from the SRE, the AC component can provide the size of the configuration data that needs to be saved in the isolated location memory. For example, the AC component can provide the maximum number of reads that the SRE needs to complete during the save operation. The SRE can write the size of the configuration data to the isolated local memory, e.g., in a first portion, e.g., a byte, of the allocated memory for the AC component. After writing the size information, the SRE can increase the value of the pointer such that the pointer can point to the next portion of the allocated memory.

The system can write the configuration data of the AC component in the isolated local memory (316). After setting the read and write pointers (and after the initial read and write of the size information), the SRE can sequentially read a portion of the configuration data from the AC component and can sequentially write the portion to the isolated memory, until reaching the size of the configuration data. For example, the SRE can increase the read pointer to the AC component to read from the AC component. The SRE can increase the write pointer to the isolated local memory.

In some implementations, the SRE can include a read counter that counts the number of reads that the SRE has completed during the save operation. If the value of the read counter is smaller than the size of the configuration data, e.g., the maximum number of reads, the SRE can continue to read the next portion of the configuration data. If the value of the read counter is not smaller than the size of the configuration data, the system can determine that the save operation is successfully completed.

The system can send a save completion response to the power manager (318). If the save operation is successfully completed for AC component, the SRE can send a save completion response, e.g., the saveRdy 134 signal, to the power manager. If the SRE receives an error from the AC component, the SRE can report the error back to the power manager, e.g., the saveResp 136 signal, and the SRE can stop the save operation.

In some implementations, the SRE needs to save multiple AC components of a subsystem to the isolated local memory. If the save operation for the current AC component is completed, the SRE can save the next component in the AC table for the subsystem. The process continues until all valid components in the AC table for the subsystem are saved. When all the AC components for the subsystem are saved, the SRE can respond to the power manager with a save completion response.

In some implementations, the power manager can send a sequence of identifications corresponding to a plurality of AC components that need to be saved. The SRE can process the sequence of the identifications in parallel and can save the configuration data for the plurality of AC components in parallel. Therefore, the system can improve the efficiency and enhance the performance of the save operation.

After receiving the save completion response, the power manager can proceed with the power collapse of the subsystem or the AC component. In some implementations, after completing the save operation, the SRE can set a field, e.g., a VLD bit, in its local table to 1, indicating that the AC component has been successfully saved in the isolated local memory.

In some implementations, after the save operation is successfully completed, the SRE can send a signal 122 to the subsystem or the AC component. For example, the signal, e.g., signal value equals 1, can indicate that a restore operation for the AC component is pending. The signal can cause the AC component to enter a state in which other components or transactions cannot access the configuration data of the AC component until a restore operation is completed. For example, after receiving the signal, the AC component can block any client transactions, unless the transaction comes from SRE, until the restore operation is completed for the AC component. In some implementations, the signal 122 is not driven to the AC component covering subsystem power management such that the power manager can perform power up sequences.

In some implementations, the example process 300 can be used for saving configuration data of other types of components or in a computing device that needs save/restore, and the one or more components are not security-related AC components. In some implementations, the component can be a memory mapped component in an SoC. In some implementations, the component can be an IO mapped component in an SoC. In some implementations, the component can include one or more registers in a computing device. That is, the save-restore engine (SRE) is a generic save/restore engine and the technology described in this specification is not specific to the security-related AC components.

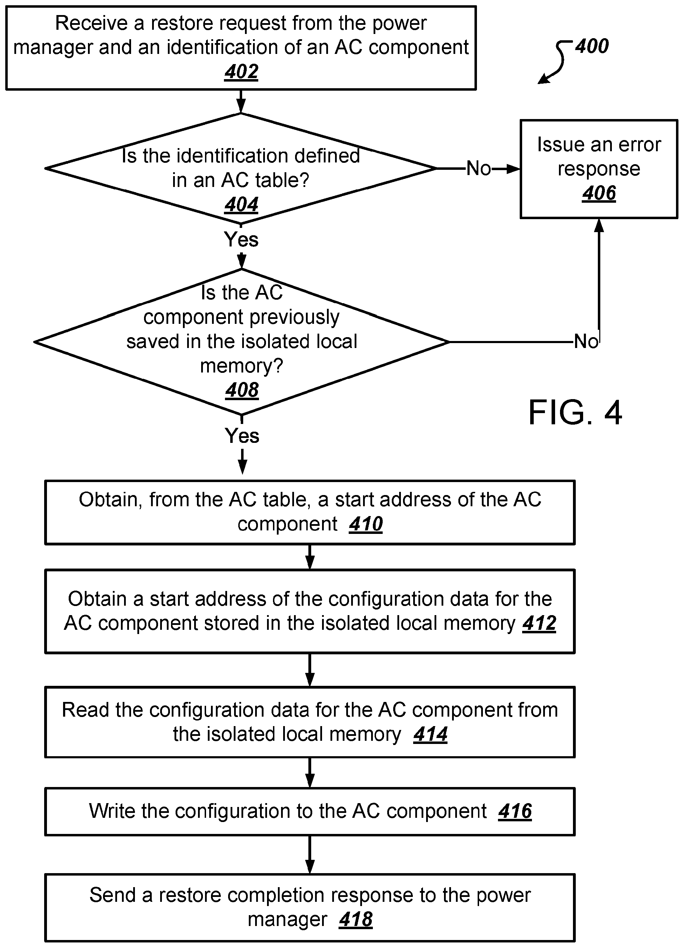

FIG. 4 is a flowchart of an example process 400 for restoring configuration data. For convenience, the process 400 will be described as being performed by a system that includes an SRE in the computing device, e.g., the SRE 102 in the computing device 100 of FIG. 1. The system can include the components described in reference to FIG. 1, including one or more AC components, a power manager, an isolated local memory, an AC table, or some combination of these.

During a power restore event, before sending the restore request to the SRE, a power manager can first restore the power rails and can communicate to the subsystem power management component in the subsystem under the restoration to release resets for the AC components. The power system can also communicate to the buses, e.g., the system bus 110, that is connected to the AC components. The address remapper 128 can be held in a reset or disabled state such that the AC component can have a static address in the physical address space. Because the signal 122 from the SRE is on, the AC component can block access to the configuration data of the AC components from any other transactions or components

The system can receive a restore request from the power manager and an identification (ID) of an AC component (402). For example, after completing the power up sequence for the AC components and the buses, the power manager can issue a restore request, e.g., the restoreReq 138 signal, to the SRE and can provide the ID of the AC component to be restored, e.g., the restoreSswrpid 140 signal. The power manager can wait until a completion response or an error response is received from the SRE.

The system can determine whether the identification is defined in an AC table (404). For example, upon receiving the restore request, the SRE can check whether the requested AC component or the subsystem of the AC components is defined in the AC table that defines the AC components. If the system determines that the identification is not defined in the AC table, the system can issue an error response (406).

In some implementations, the system can use a digital fingerprint of the configuration data to protect the configuration data against possible tampering while it is being stored in the isolated local memory. When storing the configuration data of the AC component in the isolated local memory, the system can compute a digital fingerprint of the configuration data, e.g., a checksum or a cryptographic hash. The digital fingerprint can be computed and saved at the time of the save operation. When the system performs the restore operation, the system can compute a digital fingerprint of the configuration data restored from the isolated local memory. The system can compare the digital fingerprint of the restored configuration data and the digital fingerprint computed at the time of the save operation. If the two digital fingerprints do not match, the system can generate a system error and the restore operation can be aborted. If the two digital fingerprints match, the system can determine that the configuration data of the AC component has not been tampered while it is being stored in the isolated local memory.

If the system determines that the identification is defined in the AC table, the system can determine whether the AC component is previously saved in the isolated local memory (408). For example, the SRE can check if the AC component is previously saved by checking the VLD bit for the corresponding entry of the AC component in the local table of the SRE. If the system determines that the AC component is not previously saved in the isolated local memory, the system can issue an error response (406). For example, if the VLD bit indicates that the AC component is not previously saved in the isolated local memory, the SRE can send an error response to the power manager.

If the system determines that the AC component is previously saved in the isolated local memory, the system can obtain, from the AC table, a start address of the AC component (410). For example, if the VLD bit indicates that the AC component is previously saved in the isolated local memory, the SRE can read the start address of the AC component indicated in the AC table. In some implementations, the SRE receives a restore request to restore a plurality of AC components in a subsystem and an ID of the subsystem. The SRE can read the start address of the subsystem indicated in the AC table. The SRE can include a write pointer and the SRE can set the write pointer to the first AC component, e.g., component 0, at the start address of the subsystem. After the SRE finishes writing the first AC component, the SRE can move the write pointer to point to the next AC component in the subsystem.

The system can obtain a start address of the configuration data for the AC component stored in the isolated local memory (412). For example, the SRE can load, from its local table, the start address of the configuration data that is stored in the isolated local memory. The SRE can include a read pointer to access the isolated local memory for restoration and the SRE can set the read pointer to the start address. In some implementations, the SRE can include a restore state machine 208 and the restore state machine 208 can store the read pointer and the write pointer.

The system can read the configuration data for the AC component from the isolated local memory (414). For example, the system can read the configuration data for the AC component using the read pointer that points to configuration data stored in the isolated local memory. The system can write the configuration data for the AC component (416). In some implementations, after setting the write pointer to the AC component and setting the read pointer to start address of the configuration data in the isolated local memory, the SRE can issue an initial read to get the size information of the configuration data of the AC component stored in the isolated local memory. For example, the SRE can obtain the maximum number of writes that the SRE needs to complete during the restore operation. The system can sequentially read a portion of the configuration data from the isolated local memory and can sequentially write the portion to the AC component until reaching the size of the configuration data. For example, the SRE can read the configuration data from the isolated local memory and can write the configuration data to the AC component with a signal indicating that this communication is from the SRE. This process can be repeated over all the portions of the AC component indicated by the size information of the AC component.

In some implementations, after writing the first portion of the configuration data to the AC component, the signal can cause the AC component to enter a state in which the AC component is accessible only by the SRE. For example, after the first write, the AC component can identify that the restoration operation has been initiated and the AC component can block any attempts to access its configuration data from other components or transactions When the restoration for the AC component is completed, the AC component can unlock the access to its configuration data from the other components or transactions,

In some implementations, during the restoration, if a write operation to the AC component results in an error response, the restore operation can be considered to have failed. The SRE can issue an error response to the power manager, e.g., the restoreResp 144 signal. In some implementations, in this scenario, the power manager can determine to perform a cold reboot of the computing device.

In some implementations, when receiving multiple restore requests within a period of time or simultaneously, the SRE can queue up the multiple restore requests received from the power manager. The SRE can send a response message, e.g., the restoreResp 144 signal, to the power manager. The response message can include the ID of the AC component that is being queued up or together with an identification of the subsystem to be saved.

In some implementations, the SRE can include a write counter that counts the number of writes that the SRE has completed during the restore operation. If the value of the write counter is smaller than the size of the configuration data saved in the isolated location memory, e.g., the maximum number of writes, the SRE can continue to write the next portion of the configuration data to the AC component. If the value of the write counter is not smaller than the size of the configuration data saved in the isolated local memory, the system can determine that the restore operation is successfully completed.

The system can send a restore completion response, e.g., the restoreRdy 142 signal, to the power manager (418). In some implementations, the SRE may need to restore a plurality of AC components in a subsystem. The SRE can sequentially restore the configuration data of each AC component identified in the AC table for the subsystem. After all the AC components for the subsystem are restored, successfully, the system can send a restore completion response to the power manager.

In some implementations, the power manager can send a sequence of identifications corresponding to a plurality of AC components that need to be restored. The SRE can process the sequence of the identifications in parallel and can restore the configuration data for the plurality of AC components in parallel. Therefore, the system can improve the efficiency and enhance the performance of the restore operation.

In some implementations, after successful completion of the restoration, the SRE can invalidate the field, e.g., the VLD bit, in its local table to indicate that the AC component is no longer saved in the isolated local memory. For example, the SRE can set the VLD bit of a corresponding entry in the local table to 0.

In some implementations, the SRE can send a signal 122 to the subsystem or the AC component that has been restored. For example, the signal can indicate the restore operation for the AC component is completed. The signal can cause the AC component to permit access from other components or transactions. For example, after setting the signal to 0, an AC component, e.g., a firewall, can enter into a state in which transactions are allowed to flow through the firewall with proper permission checks based on the restored configuration data of the firewall. In some implementations, upon successful completion of the restoration operation by the SRE, the power manager can release the rest of the subsystem out of a reset status for function operation. Thus, the power restoration of the subsystem is completed.

In some implementations, the example process 400 can be used for restoring configuration data of other types of components or in a computing device that needs save/restore, and the one or more components are not security-related AC components. In some implementations, the component can be a memory mapped component in an SoC. In some implementations, the component can be an IO mapped component in an SoC. In some implementations, the component can include one or more registers in a computing device. That is, the save-restore engine (SRE) is a generic save/restore engine and the technology described in this specification is not specific to the security-related AC components.

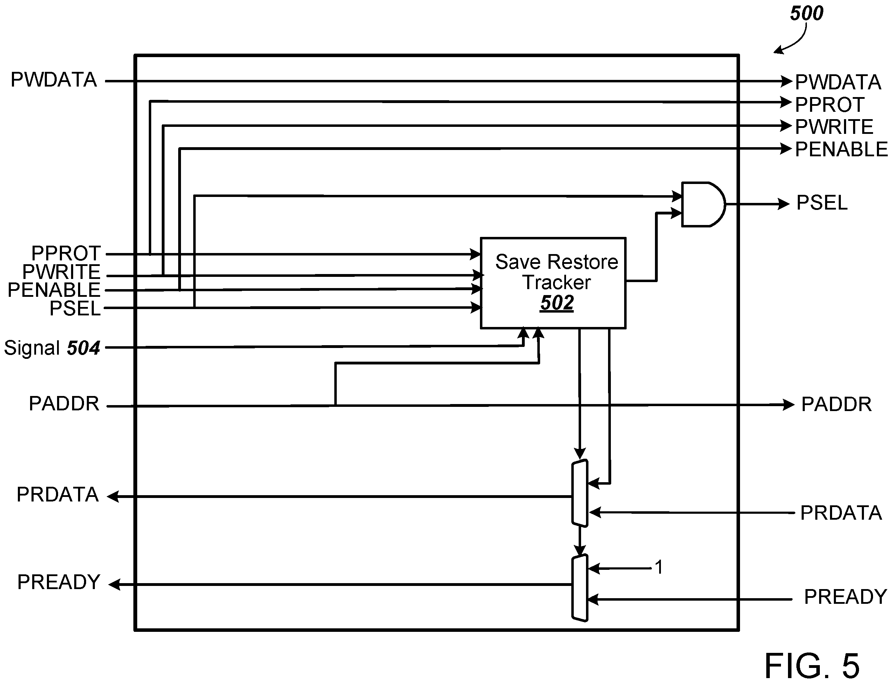

FIG. 5 is a diagram of an example generic save-restore widget 500. In some implementations, a computing device can include a generic module or client device that has a respective generic AC component, e.g., an SMMU. Because it can be difficult or impossible to adapt the AC component to support the save and restore operations for the SRE, the computing device 100 can include a widget, e.g., a generic save-restore widget 500, to help support the save and restore operations for the SRE.

The widget can include a save restore tracker 502 that tracks when the save operation or the restore operation starts and ends. The save restore tracker 502 can identify a save request or a restore request from the SRE. For example, the save restore tracker 502 can identify the start of a save operation or a restore operation when the SRE accesses the first location of the AC component.

The restore tracker 502 can cause the generic AC component to enter into a state in which the generic AC component is accessible only by the SRE and the widget 500. For example, the restore tracker 502 can disable system access to the configuration data of the AC component during save/restore operations from other components or transactions. Thus, the tracker 502 can prevent the system from changing the state of the generic AC component during the operation.

After successful completion of the save operation, the tracker 502 can enable the AC component to enter into a state in which the configuration data of the AC component is not accessible by other components or transactions until the AC component is successfully restored. For example, the SRE can send a signal 504, e.g., the signal 122 in FIG. 1, to the save restore tracker 502 to identify the completion of the restore operation for the AC component or the subsystem of the AC component.

The widget 500 can be configured to send size information of the configuration data of the generic AC component to the SRE. For example, the widget can compute the size information for the save operation and can send the size information to the SRE during the first read of the save operation.

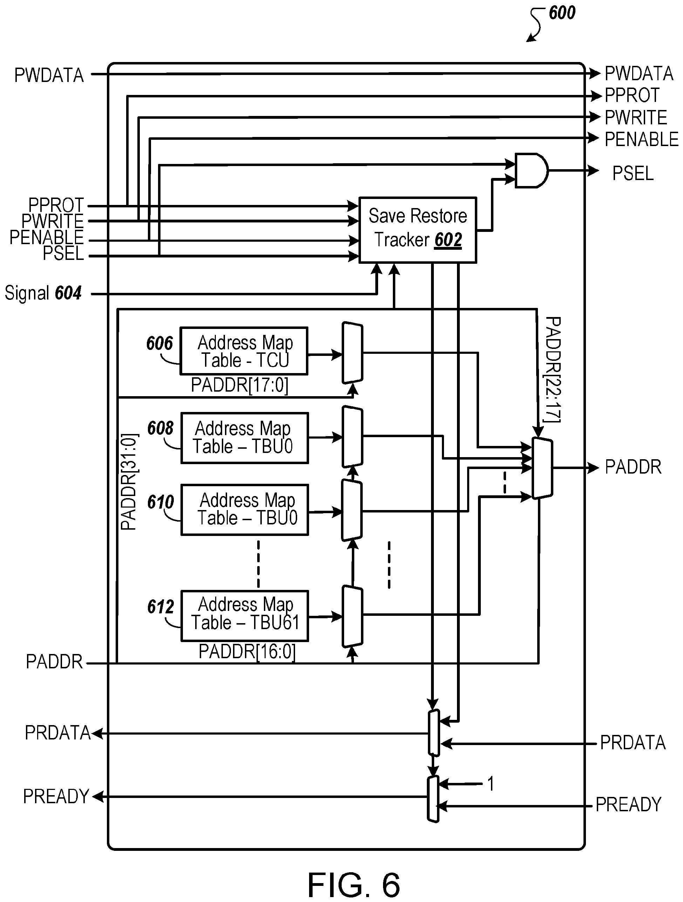

FIG. 6 is a diagram of an example save-restore widget 600 for a third party access control (AC) component. For example, the save-restore widget 600 can be the widget 118 for the third party AC component 116 in FIG. 1.

The computing device can include a third party AC component. For example, the third party component can be a third party IP vendor, e.g., an SMMU that includes a transaction control unit (TCU) and a transaction buffer unit (TBU). The computing device can include a widget 600 configured to implement a save restore tracker 602 that tracks when the save operation or the restore operation starts and ends. For example, the save restore tracker 602 can identify a save request or a restore request from the SRE. The start of the save/restore operation can be identified when an access is made to the first location of the TCU/TBU component with a signal indicating that the access is from an SRE

In some implementations, the widget 600 can be configured to send a signal to the third party AC component, and the signal can cause the third party component to enter a state in which the third party AC component is accessible only by the SRE and the widget 600 until the SRE completes saving or restoring the third party AC component. For example, after identifying a save request or a restore request, the tracker can lock system accesses to the configuration data of an SMMU during the save/restore operations. The tracker 602 can disable any access, originating from non-SRE initiators when the save or restore operation has started. Therefore, the tracker 602 can prevent the system from changing the configuration data, e.g., including the state data, of the third party component during the save/restore operation.

After successful completion of the save operation, the tracker 602 can enable the AC component to enter into a state in which the configuration data of the AC component is not accessible by other components or transactions until the AC component is successfully restored. For example, the SRE can send a signal 604, e.g., the signal 122 in FIG. 1, to the save restore tracker 602 to identify the completion of the restore operation for the AC component or the subsystem of the AC component.

The widget 600 can be configured to send size information of the configuration data of the third party AC component to the SRE. For example, the widget can compute the size information for the save operation and can send the size information to the SRE during the first read of the save operation.

In some implementations, the widget 600 can include an address map table for each module in the third party AC component. For example, the widget 600 can include an address map table, e.g., the address map table 606, for the TCU, and an address map table, e.g., the address map tables 608, 610 ... 612, for each of the TBU. The address map table can translate an input address into the address for each module in the third party AC component, e.g., the TCU/TBU address, during the save/restore operation. In some implementations, the widget 600 can be configured to perform a provision of a mechanism to compact the payload to be saved in an isolated local memory by the SRE.

For example, the widget 600 can use the address map table to select critical control registers in TCU/TBU that need to be saved. Therefore, the amount of configuration data to be saved can be reduced.

Embodiments of the subject matter and the actions and operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

The processing components described in this specification refer to data processing hardware and encompass all kinds of apparatus, devices, and machines for processing data, including by way of example a programmable processor, a microprocessor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, or a combination of one or more of them.

A computer program, which may also be referred to or described as a program, software, a software application, an app, a module, a software module, an engine, a script, or code, can be written in any form of programming language, including compiled or interpreted languages, or declarative or procedural languages; and it can be deployed in any form, including as a stand-alone program or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub-programs, or portions of code.

While this specification contains many specific implementation details, these should not be construed as limitations on the scope of any invention or on the scope of what is being or may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A device comprising:
a power manager configured to control power provided to a plurality of power domains on the device, wherein each power domain has a respective client device,
wherein each respective client device has a respective access control (AC) component that is configured to control which other components on the device can communicate with the respective client device; and
a save-restore engine (SRE) configured to save, in an isolated local memory, configuration data for an AC component located in a power domain affected by the power manager initiating a power collapse operation, wherein saving the configuration data for the AC component in the isolated local memory comprises:
receiving, by the SRE, a save request from the power manager and an identification of the AC component;
determining, by the SRE, that the identification is defined in an access control table that defines the AC component;
reading, by the SRE, the configuration data for the AC component from the AC component;
writing, by the SRE, the configuration data for the AC component in the isolated local memory; and
sending, by the SRE, a save completion response to the power manager, and
wherein the SRE is configured to restore, from the isolated local memory, the configuration data of the AC component when the power manager restores the power to the power domain of the AC component.

2. A device comprising:
a power manager configured to control power provided to a plurality of power domains on the device, wherein each power domain has a respective client device,
wherein each respective client device has a respective access control (AC) component that is configured to control which other components on the device can communicate with the respective client device; and
a save-restore engine (SRE) configured to save, in an isolated local memory, configuration data for an AC component located in a power domain affected by the power manager initiating a power collapse operation, and
wherein the SRE is configured to restore, from the isolated local memory, the configuration data of the AC component when the power manager restores the power to the power domain of the AC component, wherein restoring the configuration data for the AC component from the isolated local memory comprises:
receiving, by the SRE, a restore request from the power manager and an identification of the AC component;
determining, by the SRE, that the identification is defined in an access control table that defines the AC component;
reading, by the SRE, the configuration data for the AC component from the isolated local memory;
writing the configuration data to the AC component; and
sending a restore completion response to the power manager.

3. The device of any of claims 1 or 2, wherein the SRE comprises a local table that includes, for the AC component:
a first field that indicates if the AC component is successfully saved in the isolated local memory; and
a second field that indicates a start address in the isolated local memory to perform the save operation and the restore operation.

4. The device of claim 1, wherein saving the configuration data for the AC component in the isolated local memory comprises:
in response to determining that the identification is defined in the access control table, obtaining, by the SRE from the access control table, a start address of the AC component;
determining, by the SRE, whether memory space for the AC component is allocated in the isolated local memory; and
in response to determining that the memory space for the AC component is not allocated, allocating the memory space for the AC component using an unmapped address location in the isolated local memory; and/or
wherein saving the configuration data for the AC component comprises: sending, by the SRE, a save completion response to the power manager.

5. The device of any of claims 1 or 2, wherein during saving the configuration data for the AC component in the isolated local memory, the SRE is configured to send a signal to the AC component, wherein the signal causes the AC component to enter a state in which the AC component is accessible only by the SRE.

6. The device of claim 2, wherein restoring the configuration data for the AC component from the isolated local memory comprises:
in response to determining that the identification is defined in the access control table,
determining, by the SRE, that the AC component is previously saved in the isolated local memory;
in response, obtaining, by the SRE from the access control table, a start address of the AC component; and
obtaining, by the SRE, a start address of the configuration data for the AC component stored in the isolated local memory; and/or
wherein restoring the configuration data for the AC component comprises: sending, by the SRE, a restore completion response to the power manager.

7. The device of any of claims 1 or 2, wherein during restoring the configuration data for the AC component in the isolated local memory, the SRE is configured to send a signal to the AC component, wherein the signal causes the AC component to enter a state in which the AC component is accessible only by the SRE.

8. The device of any of claims 1 or 2, wherein the AC component is a third party AC component, wherein the device further comprises a widget configured to implement a save restore tracker that tracks when the save operation or the restore operation starts and ends; and optionally,
wherein the widget is configured to send a signal to the third party AC component, wherein the signal causes the third party AC component to enter a state in which the third party AC component is accessible only by the SRE and the widget until the SRE completes saving or restoring the third party AC component.

9. The device of any of claims 1 or 2, wherein saving the configuration data for the AC component in the isolated local memory comprises:
obtaining, from the AC component and by the SRE, size of the configuration data that needs to be saved in the isolated local memory;
writing, by the SRE, the size of the configuration data in the isolated local memory; and
sequentially reading a portion of the configuration data from the AC component and writing the portion to the isolated local memory until reaching the size of the configuration data.

10. The device of claim 1, wherein restoring the configuration data for the AC component from the isolated local memory comprises:
obtaining, from the isolated local memory and by the SRE, size of the configuration data that needs to be restored; and
sequentially reading a portion of the configuration data from the isolated local memory and writing the portion to the AC component until reaching the size of the configuration data.

11. The device of claim 1, wherein the SRE is configured to:
save, in the isolated local memory, a first digital fingerprint of the configuration data for the AC component to be saved,
obtain a second digital fingerprint of the configuration data for the AC component restored from the isolated local memory, and
determine whether the configuration data stored in the isolated local memory is tampered based at least on comparing the first digital fingerprint and the second digital fingerprint.

12. The device of claim 1, wherein the isolated local memory comprises a dynamic random access memory (DRAM), wherein the SRE is configured to save the configuration data for the AC component in the DRAM, and wherein the SRE protects the configuration data against tampering using a cryptography method.

13. A method, comprising:
receiving, by a save-restore engine (SRE), a save request from a power manager and an identification of an access control (AC) component;
obtaining, by the SRE from an AC table, a start address of the AC component;
reading, by the SRE, configuration data for the AC component from the AC component;
writing, by the SRE, the configuration data for the AC component in isolated local memory; and
sending, by the SRE, a save completion response to the power manager.

14. A method, comprising:
receiving, by a save-restore engine (SRE), a restore request from a power manager and an identification of an access control (AC) component;
obtaining, by the SRE from an AC table, a start address of the AC component;
reading, by the SRE, configuration data for the AC component from isolated local memory;
writing, by the SRE, the configuration data to the AC component; and
sending, by the SRE, a restore completion response to the power manager.

15. One or more non-transitory storage media encoded with instructions that when executed by a save-restore engine (SRE) of a computing device cause the SRE to perform operations according to any of claims 13 - 14.

## Patentansprüche

1. Vorrichtung, umfassend:
einen Energieverwalter, der dazu konfiguriert ist, die bereitgestellte Energie für eine Vielzahl von Energiedomänen auf der Vorrichtung zu steuern, wobei jede Energiedomäne eine jeweilige Client-Vorrichtung aufweist,
wobei jede jeweilige Client-Vorrichtung eine jeweilige Zugangssteuerungskomponente (access control, AC) aufweist, die dazu konfiguriert ist, zu steuern, welche anderen Komponenten auf der Vorrichtung mit der jeweiligen Client-Vorrichtung kommunizieren können; und
eine Speicherwiederherstellungs-Engine (save-restore engine, SRE), die dazu konfiguriert ist, in einem isolierten lokalen Speicher Konfigurationsdaten für eine AC-Komponente zu speichern, die sich in einem Energiebereich befindet, der von dem Energieverwalter beeinflusst wird, der einen Energiezusammenbruchs-Vorgang initialisiert, wobei Speichern der Konfigurationsdaten für die AC-Komponente in dem isolierten lokalen Speicher Folgendes umfasst:
Empfangen einer Speicheranforderung aus dem Energieverwalter und einer Identifizierung der AC-Komponente durch die SRE;
Bestimmen, dass die Identifizierung in einer Zugangssteuerungstabelle definiert ist, die die AC-Komponente definiert, durch die SRE;
Lesen der Konfigurationsdaten der AC-Komponente aus der AC-Komponente durch die SRE;
Schreiben der Konfigurationsdaten für die AC-Komponente in dem isolierten lokalen Speicher durch die SRE; und
Senden einer sicheren Abschlussreaktion an den Energieverwalter durch die SRE, und
wobei die SRE dazu konfiguriert ist, die Konfigurationsdaten der AC-Komponente aus dem isolierten lokalen Speicher wiederherzustellen, wenn der Energieverwalter den Energiebereich der AC-Komponente wieder mit Energie versorgt.

2. Vorrichtung, umfassend:
einen Energieverwalter, der dazu konfiguriert ist, die bereitgestellte Energie für eine Vielzahl von Energiedomänen auf der Vorrichtung zu steuern, wobei jede Energiedomäne eine jeweilige Client-Vorrichtung aufweist,
wobei jede jeweilige Client-Vorrichtung eine jeweilige Zugangssteuerungskomponente, AC, aufweist, die dazu konfiguriert ist, zu steuern, welche anderen Komponenten auf der Vorrichtung mit der jeweiligen Client-Vorrichtung kommunizieren können; und
eine Speicherwiederherstellungs-Engine (save-restore engine, SRE), die dazu konfiguriert ist, in einem isolierten lokalen Speicher Konfigurationsdaten für eine AC-Komponente zu speichern, die sich in einem Energiebereich befindet, der von dem Energieverwalter beeinflusst wird, der einen Energiezusammenbruchs-Vorgang initialisiert, und
wobei die SRE dazu konfiguriert ist, die Konfigurationsdaten der AC-Komponente aus dem isolierten lokalen Speicher wiederherzustellen, wenn der Energieverwalter den Energiebereich der AC-Komponente wieder mit Energie versorgt, wobei Wiederherstellen Konfigurationsdaten für die AC-Komponente aus dem isolierten lokalen Speicher Folgendes umfasst:
Empfangen einer Wiederherstellungsanforderung aus dem Energieverwalter und einer Identifizierung der AC-Komponente durch die SRE;
Bestimmen, dass die Identifizierung in einer Zugangssteuerungstabelle definiert ist, die die AC-Komponente definiert, durch die SRE;
Lesen der Konfigurationsdaten für die AC-Komponente aus dem isolierten lokalen Speicher durch die SRE;
Schreiben der Konfigurationsdaten in die AC-Komponente; und
Senden einer Wiederherstellungs-Abschlussreaktion an den Energieverwalter.

3. Vorrichtung nach einem der Ansprüche 1 oder 2, wobei die SRE eine lokale Tabelle umfasst, die für die AC-Komponente Folgendes beinhaltet:
ein erstes Feld, das angibt, ob die AC-Komponente erfolgreich in dem isolierten lokalen Speicher gespeichert wurde; und
ein zweites Feld, das eine Startadresse in dem isolierten lokalen Speicher angibt, um den Speichervorgang und den Wiederherstellungsvorgang durchzuführen.

4. Vorrichtung nach Anspruch 1, wobei das Speichern der Konfigurationsdaten für die AC-Komponente in dem isolierten lokalen Speicher Folgendes umfasst:
als Reaktion auf das Bestimmen, dass die Identifizierung in der Zugangssteuerungstabelle definiert ist, Erlangen einer Startadresse der AC-Komponente durch die SRE aus der Zugangssteuerungstabelle;
Bestimmen, ob Speicherplatz für die AC-Komponente in dem isolierten lokalen Speicher zugewiesen ist, durch die SRE; und
als Reaktion auf das Bestimmen, dass der Speicherplatz für die AC-Komponente nicht zugewiesen ist, Zuweisen des Speicherplatzes für die AC-Komponente unter Verwendung eines nicht abgebildeten Adressstandorts in dem isolierten lokalen Speicher; und/oder
wobei das Speichern der Konfigurationsdaten für die AC-Komponente folgendes umfasst: Senden einer sicheren Abschlussreaktion durch die SRE an den Energieverwalter.

5. Vorrichtung nach einem der Ansprüche 1 oder 2, wobei während des Speicherns der Konfigurationsdaten für die AC-Komponente in dem isolierten lokalen Speicher die SRE dazu konfiguriert ist, ein Signal an die AC-Komponente zu senden, wobei das Signal die AC-Komponente veranlasst, in einen Zustand einzutreten, in dem die AC-Komponente nur durch die SRE zugänglich ist.

6. Vorrichtung nach Anspruch 2, wobei das Wiederherstellen der Konfigurationsdaten für die AC-Komponente aus dem isolierten lokalen Speicher Folgendes umfasst:
als Reaktion auf das Bestimmen, dass die Identifizierung in der Zugangssteuerungstabelle definiert ist,
Bestimmen, dass die AC-Komponente vorhergehend in dem isolierten lokalen Speicher gespeichert wurde, durch die SRE;
als Reaktion das Erlangen einer Startadresse der AC-Komponente durch die SRE aus der Zugangssteuerungstabelle; und
Erlangen einer Startadresse der Konfigurationsdaten für die AC-Komponente, die in dem isolierten lokalen Speicher gespeichert sind, durch die SRE; und/oder
wobei das Wiederherstellen der Konfigurationsdaten für die AC-Komponente folgendes umfasst: Senden einer Wiederherstellungs-Abschlussreaktion durch die SRE an den Energieverwalter.

7. Vorrichtung nach einem der Ansprüche 1 oder 2, wobei während des Wiederherstellens der Konfigurationsdaten für die AC-Komponente in dem isolierten lokalen Speicher die SRE dazu konfiguriert ist, ein Signal an die AC-Komponente zu senden, wobei das Signal die AC-Komponente veranlasst, in einen Zustand einzutreten, in dem die AC-Komponente nur durch die SRE zugänglich ist.

8. Vorrichtung nach einem der Ansprüche 1 oder 2, wobei die AC-Komponente eine Drittanbieter-AC-Komponente ist, wobei die Vorrichtung ferner ein Widget umfasst, das dazu konfiguriert ist, einen Speicher-Wiederherstellungs-Tracker zu implementieren, der verfolgt, wann der Speichervorgang oder der Wiederherstellungsvorgang beginnt und endet; und optional, wobei das Widget dazu konfiguriert ist, ein Signal an die Drittanbieter-AC-Komponente zu senden, wobei das Signal die Drittanbieter-AC-Komponente dazu veranlasst, in einen Zustand einzutreten, in dem die Drittanbieter-AC-Komponente nur durch die SRE und das Widget zugreifbar ist, bis die SRE das Speichern oder Wiederherstellen der Drittanbieter-AC-Komponente abgeschlossen hat.

9. Vorrichtung nach einem der Ansprüche 1 oder 2, wobei das Speichern der Konfigurationsdaten für die AC-Komponente in dem isolierten lokalen Speicher Folgendes umfasst:
Erlangen der Größe der Konfigurationsdaten, die in dem isolierten lokalen Speicher gespeichert werden müssen, aus der AC-Komponente und durch die SRE;
Schreiben der Größe der Konfigurationsdaten in den isolierten lokalen Speicher durch die SRE; und
sequentielles Lesen eines Abschnitts der Konfigurationsdaten aus der AC-Komponente und Schreiben des Abschnitts in den isolierten lokalen Speicher, bis die Größe der Konfigurationsdaten erreicht ist.

10. Vorrichtung nach Anspruch 1, wobei das Wiederherstellen der Konfigurationsdaten für die AC-Komponente aus dem isolierten lokalen Speicher Folgendes umfasst:
Erlangen der Größe der Konfigurationsdaten, die wiederhergestellt werden müssen, aus dem isolierten lokalen Speicher und durch die SRE; und
sequentielles Lesen eines Abschnitts der Konfigurationsdaten aus dem isolierten lokalen Speicher und Schreiben des Abschnitts in die AC-Komponente, bis die Größe der Konfigurationsdaten erreicht ist.

11. Vorrichtung nach Anspruch 1, wobei die SRE zu Folgendem konfiguriert ist:
Speichern eines ersten digitalen Fingerabdrucks der Konfigurationsdaten für die zu sichernde AC-Komponente in dem isolierten lokalen Speicher,
Erlangen eines zweiten digitalen Fingerabdrucks der Konfigurationsdaten für die AC-Komponente, die aus dem isolierten lokalen Speicher wiederhergestellt wurden, und
Bestimmen, ob die in dem isolierten lokalen Speicher gespeicherten Konfigurationsdaten manipuliert wurden, basierend mindestens auf Vergleichen des ersten digitalen Fingerabdrucks und des zweiten digitalen Fingerabdrucks.

12. Vorrichtung nach Anspruch 1, wobei der isolierte lokale Speicher einen dynamischen Direktzugriffsspeicher (dynamic random access memory, DRAM) umfasst, wobei die SRE dazu konfiguriert ist, die Konfigurationsdaten für die AC-Komponente in dem DRAM zu speichern und wobei die SRE die Konfigurationsdaten unter Verwendung eines Kryptographieverfahrens gegen Manipulationen schützt.

13. Verfahren, umfassend:
Empfangen einer Speicheranforderung von dem Energieverwalter und einer Identifizierung einer Zugangssteuerung (AC) durch die SRE (Save-Restore Engine);
Erlangen einer Startadresse der AC-Komponente durch die SRE aus einer AC-Tabelle;
Lesen von Konfigurationsdaten der AC-Komponente aus der AC-Komponente durch die SRE;
Schreiben der Konfigurationsdaten für die AC-Komponente in dem isolierten lokalen Speicher durch die SRE; und
Senden einer sicheren Abschlussreaktion an den Energieverwalter durch die SRE.

14. Verfahren, umfassend:
Empfangen einer Wiederherstellungsanforderung von dem Energieverwalter und einer Identifizierung einer Zugangssteuerung (AC) durch die Speicherwiederherstellungs-Engine (SRE);
Erlangen einer Startadresse der AC-Komponente durch die SRE aus einer AC-Tabelle;
Lesen von Konfigurationsdaten für die AC-Komponente aus dem isolierten lokalen Speicher durch die SRE;
Schreiben der Konfigurationsdaten in die AC-Komponente durch die SRE; und
Senden einer Wiederherstellungs-Abschlussreaktion an den Energieverwalter durch die SRE.

15. Ein oder mehrere nichttransitorische Speichermedien, die mit Anweisungen codiert sind, die, wenn sie durch eine Speicherwiederherstellungs-Engine (SRE) einer Rechenvorrichtung ausgeführt werden, die SRE veranlassen, Vorgänge nach einem der Ansprüche 13-14 durchzuführen.

## Revendications

1. Dispositif comprenant :
un gestionnaire d'alimentation configuré pour commander l'alimentation fournie à une pluralité de domaines d'alimentation sur le dispositif, dans lequel chaque domaine d'alimentation possède un dispositif client respectif,
dans lequel chaque dispositif client respectif possède un composant de contrôle d'accès (CA) respectif qui est configuré pour commander quels autres composants du dispositif peuvent communiquer avec le dispositif client respectif ; et
un moteur de sauvegarde-restauration (SRE) configuré pour sauvegarder, dans une mémoire locale isolée, des données de configuration pour un composant CA situé dans un domaine d'alimentation affecté par le gestionnaire d'alimentation déclenchant une opération de coupure d'alimentation, dans lequel la sauvegarde des données de configuration pour le composant CA dans la mémoire locale isolée comprend :
la réception, par le SRE, d'une demande de sauvegarde du gestionnaire d'alimentation et d'une identification du composant CA ;
le fait de déterminer, par le SRE, que l'identification est définie dans une table de contrôle d'accès qui définit le composant CA ;
la lecture, par le SRE, des données de configuration pour le composant CA à partir du composant CA ;
l'écriture, par le SRE, des données de configuration pour le composant CA dans la mémoire locale isolée ; et
l'envoi, par le SRE, d'une réponse d'achèvement de sauvegarde au gestionnaire d'alimentation, et
dans lequel le SRE est configuré pour restaurer, à partir de la mémoire locale isolée, les données de configuration du composant CA lorsque le gestionnaire d'alimentation restaure l'alimentation dans le domaine d'alimentation du composant CA.

2. Dispositif comprenant :
un gestionnaire d'alimentation configuré pour commander l'alimentation fournie à une pluralité de domaines d'alimentation sur le dispositif, dans lequel chaque domaine d'alimentation possède un dispositif client respectif,
dans lequel chaque dispositif client respectif possède un composant de contrôle d'accès (CA) respectif qui est configuré pour commander quels autres composants du dispositif peuvent communiquer avec le dispositif client respectif ; et
un moteur de sauvegarde-restauration (SRE) configuré pour sauvegarder, dans une mémoire locale isolée, des données de configuration pour un composant CA situé dans un domaine d'alimentation affecté par le gestionnaire d'alimentation déclenchant une opération de coupure d'alimentation, et
dans lequel le SRE est configuré pour restaurer, à partir de la mémoire locale isolée, les données de configuration du composant CA lorsque le gestionnaire d'alimentation restaure l'alimentation dans le domaine d'alimentation du composant CA, dans lequel la restauration des données de configuration pour le composant CA à partir de la mémoire locale isolée comprend :
la réception, par le SRE, d'une demande de restauration du gestionnaire d'alimentation et d'une identification du composant CA ;
le fait de déterminer, par le SRE, que l'identification est définie dans une table de contrôle d'accès qui définit le composant CA ;
la lecture, par le SRE, des données de configuration du composant CA à partir de la mémoire locale isolée ;
l'écriture des données de configuration dans le composant CA ; et
l'envoi d'une réponse d'achèvement de restauration au gestionnaire d'alimentation.

3. Dispositif selon l'une quelconque des revendications 1 ou 2, dans lequel le SRE comprend une table locale qui inclut, pour le composant CA :
un premier champ qui indique si le composant CA est enregistré avec succès dans la mémoire locale isolée ; et
un second champ qui indique une adresse de départ dans la mémoire locale isolée pour effectuer l'opération de sauvegarde et l'opération de restauration.

4. Dispositif selon la revendication 1, dans lequel la sauvegarde des données de configuration du composant CA dans la mémoire locale isolée comprend :
en réponse à la détermination que l'identification est définie dans la table de contrôle d'accès, l'obtention, par le SRE à partir de la table de contrôle d'accès, d'une adresse de départ du composant CA ;
le fait de déterminer, par le SRE, si l'espace mémoire pour le composant CA est alloué dans la mémoire locale isolée ; et
en réponse à la détermination que l'espace mémoire pour le composant CA n'est pas alloué, l'allocation de l'espace mémoire pour le composant CA en utilisant un emplacement d'adresse non mappé dans la mémoire locale isolée ; et/ou
dans lequel la sauvegarde des données de configuration pour le composant CA comprend : l'envoi, par le SRE, d'une réponse d'achèvement de sauvegarde au gestionnaire d'alimentation.

5. Dispositif selon l'une quelconque des revendications 1 ou 2, dans lequel, lors de la sauvegarde des données de configuration pour le composant CA dans la mémoire locale isolée, le SRE est configuré pour envoyer un signal au composant CA, dans lequel le signal amène le composant CA à entrer dans un état dans lequel le composant CA est accessible uniquement par le SRE.

6. Dispositif selon la revendication 2, dans lequel la restauration des données de configuration du composant CA à partir de la mémoire locale isolée comprend :
en réponse au fait de déterminer que l'identification est définie dans la table de contrôle d'accès,
le fait de déterminer, par le SRE, que le composant CA est préalablement enregistré dans la mémoire locale isolée ;
en réponse, l'obtention, par le SRE à partir de la table de contrôle d'accès, d'une adresse de départ du composant CA ; et
l'obtention, par le SRE, d'une adresse de départ des données de configuration pour le composant CA stockées dans la mémoire locale isolée ; et/ou
dans lequel la restauration des données de configuration pour le composant CA comprend : l'envoi, par le SRE, d'une réponse d'achèvement de restauration au gestionnaire d'alimentation.

7. Dispositif selon l'une quelconque des revendications 1 ou 2, dans lequel, lors de la restauration des données de configuration pour le composant CA dans la mémoire locale isolée, le SRE est configuré pour envoyer un signal au composant CA, dans lequel le signal amène le composant CA à entrer dans un état dans lequel le composant CA est accessible uniquement par le SRE.

8. Dispositif selon l'une quelconque des revendications 1 ou 2, dans lequel le composant CA est un composant CA tiers, dans lequel le dispositif comprend également un widget configuré pour mettre en œuvre un dispositif de suivi de sauvegarde et de restauration qui suit le moment où l'opération de sauvegarde ou l'opération de restauration commence et se termine ; et éventuellement,
dans lequel le widget est configuré pour envoyer un signal au composant CA tiers, dans lequel le signal amène le composant CA tiers à entrer dans un état dans lequel le composant CA tiers est accessible uniquement par le SRE et le widget jusqu'à ce que le SRE termine la sauvegarde ou la restauration du composant CA tiers.

9. Dispositif selon l'une quelconque des revendications 1 ou 2, dans lequel la sauvegarde des données de configuration pour le composant CA dans la mémoire locale isolée comprend :
l'obtention, à partir du composant CA et par le SRE, de la taille des données de configuration qui doivent être enregistrées dans la mémoire locale isolée ;
l'écriture, par le SRE, de la taille des données de configuration dans la mémoire locale isolée ; et
la lecture séquentielle d'une partie des données de configuration du composant CA et l'écriture de la partie dans la mémoire locale isolée jusqu'à atteindre la taille des données de configuration.

10. Dispositif selon la revendication 1, dans lequel la restauration des données de configuration pour le composant CA à partir de la mémoire locale isolée comprend :
l'obtention, à partir de la mémoire locale isolée et par le SRE, de la taille des données de configuration qui doivent être restaurées ; et
la lecture séquentielle d'une partie des données de configuration de la mémoire locale isolée et l'écriture de la partie dans le composant CA jusqu'à atteindre la taille des données de configuration.

11. Dispositif selon la revendication 1, dans lequel le SRE est configuré pour :
sauvegarder, dans la mémoire locale isolée, une première empreinte numérique des données de configuration pour le composant CA à sauvegarder,
obtenir une seconde empreinte numérique des données de configuration pour le composant CA restaurées à partir de la mémoire locale isolée, et
déterminer si les données de configuration stockées dans la mémoire locale isolée sont falsifiées en se basant au moins sur la comparaison de la première empreinte numérique et de la seconde empreinte numérique.

12. Dispositif selon la revendication 1, dans lequel la mémoire locale isolée comprend une mémoire à accès aléatoire dynamique (DRAM), dans lequel le SRE est configuré pour enregistrer les données de configuration pour le composant CA dans la DRAM, et dans lequel le SRE protège les données de configuration contre toute falsification à l'aide d'un procédé de chiffrement.

13. Procédé, comprenant :
la réception, par un moteur de sauvegarde-restauration (SRE), d'une demande de sauvegarde provenant d'un gestionnaire d'alimentation et d'une identification d'un composant de contrôle d'accès (AC) ;
l'obtention, par le SRE à partir d'une table CA, d'une adresse de départ du composant CA ;
la lecture, par le SRE, des données de configuration pour le composant CA à partir du composant CA ;
l'écriture, par le SRE, des données de configuration pour le composant CA dans la mémoire locale isolée ; et
l'envoi, par le SRE, d'une réponse d'achèvement de sauvegarde au gestionnaire d'alimentation.

14. Procédé, comprenant :
la réception, par un moteur de sauvegarde-restauration (SRE), d'une demande de restauration provenant d'un gestionnaire d'alimentation et d'une identification d'un composant de contrôle d'accès (AC) ;
l'obtention, par le SRE à partir d'une table CA, d'une adresse de départ du composant CA ;
la lecture, par le SRE, des données de configuration pour le composant CA à partir de la mémoire locale isolée ;
l'écriture, par le SRE, des données de configuration dans le composant CA ; et
l'envoi, par le SRE, d'une réponse d'achèvement de restauration au gestionnaire d'alimentation.

15. Un ou plusieurs supports de stockage non transitoires codés avec des instructions qui, lorsqu'elles sont exécutées par un moteur de sauvegarde-restauration (SRE) d'un dispositif informatique, amènent le SRE à effectuer des opérations selon l'une quelconque des revendications 13 à 14.
